# EUROPÄISCHE PATENTSCHRIFT

(11) **EP 2 746 142 B1**
(45) Veröffentlichungstag und Bekanntmachung des Hinweises auf die Patenterteilung: **06.01.2016**
(21) Anmeldenummer: 13400028.0
(22) Anmeldetag: 20.11.2013
(51) Int. Cl.: B62K 23/04

(54) **Innenliegender Doppelzug-Gasdrehgriff für kraftstoffbetriebene Fahrzeuge**
Twistable gas grip for fuel driven vehicles for operating two internal gas cables
Poignée tournante de gazâ deux cables pour véhicules fonctionnant au carburant

(43) Veröffentlichungstag der Anmeldung: 25.06.2014
(73) Patentinhaber: Saathoff, Manfred, 26529 Rechtsupweg (DE)
(72) Erfinder: Lutz, ter Hell, 26441 Jever (DE)

(56) Entgegenhaltungen:
- DE-B- 1 213 755
- DE-C- 805 124
- DE-C- 847 863
- DE-C- 960 064
- DE-C1- 19 639 476
- DE-U1- 20 214 036
- DE-U1-202013 006 519
- FR-A- 1 061 099
- GB-A- 274 181
- US-A- 2 788 676
- US-A- 5 738 610
- US-A1- 2009 044 653
- US-B1- 7 770 490

## Beschreibung

Dokument DE 847 863 C offenbart einen Drehgriff mit innenliegendem Doppelzug, auf dem der Oberbegriff von Anspruch 1 basiert.

Dieser Griff dient, wie auch schon das Vorgängermodell, mit der Anmeldenummer 202 14 036.9 vom 11.09.2002**,** zur versteckten Verlegung der Bowdenzüge z.B. durch den Lenker eines Motorrades und der zusätzlichen Aufnahme eines Lenkerenden - Blinkers welche hauptsächlich im Custom - Bereich eingesetzt werden.

Durch den aktuellen Sicherheitsstandard bei Motorrädern hinsichtlich einer garantierten Gasrückstellung bei klemmender Drosselklappe, sollten die derzeit erhältlichen Gasgriffe mit einem Innenliegenden Bowdenzug an Motorrädern neuern Baujahres nicht mehr verbaut werden. Neuere Motorräder werden deshalb in der EU nur noch mit Doppelzug - Gasgriffen ausgerüstet wobei beide Bowdenzüge außen am Lenker verlegt werden oder gerade herunterhängend angebracht sind. Diese sind Optisch nicht nur sehr unschön, sondern können in vielen Fällen beim einschlagen des Lenkers den Lack am Tank verkratzen, was bei Sonderlackierungen im Custom-Bereich meistens der Fall ist. Deshalb habe ich meinen Griff komplett neu konstruiert, um bei maximaler Sicherheit die gleich klare Optik zu erreichen wie auch mit dem Vorgänger dieses Gasgriffes. Hiermit werden jedoch alle Vorgaben des TÜV's erreicht.

### Änderungen

Die Unterschiede zum Vorgängermodell betreffen in erster Linie eine völlige Neukonstruktion des Grundkörpers **(1),** der Doppelschnecke **(4),** der doppelten Gleitstücke **(3)** mit Rollen/Kugellagern **(6),** wesendlichen Änderungen an der Aufnahmebuchse **(5)** mit Bund **(18)** und Außengewinde **(14)** zum einschrauben in das Innengewinde **(15)** des Grundkörpers **(1),** sowie am Endstück **(2)** welches nicht mehr eingepresst wird sondern mittels einer Stiftschraube **(10)** fixiert wird. Dadurch ergibt sich eine wesendlich einfachere Möglichkeit diesen Griff zu montieren und zu warten. Änderungen an den Materialien zum Vorgängermodell bleiben bis auf weiteres vorbehalten.

Des weiteren wurde von mir ein externer doppelter Bowdenzugspanner **(25)** mit zwei Senkungen **(26)** in Diesem und in den Stellschrauben **(23)** zur Fixierung und Aufnahme der Bowdenzughüllen konstruiert, welcher z.B. gut unter den Tank montiert werden kann und jederzeit ein einfaches Nach- und Einstellen der Bowdenzüge durch die Stellschrauben **(23),** welche mit den Kontermuttern **(24)** gegen ein Lösen gesichert werden, ermöglicht.

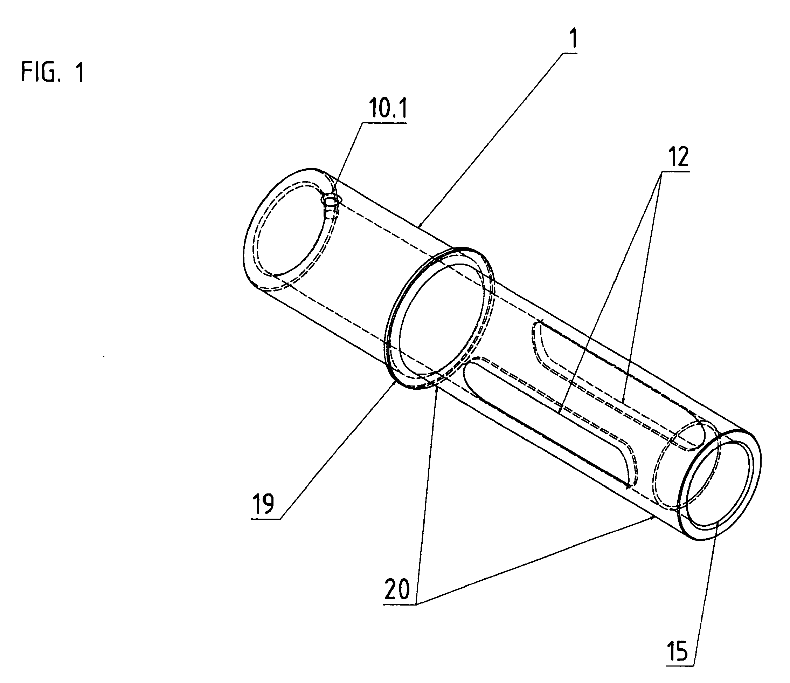

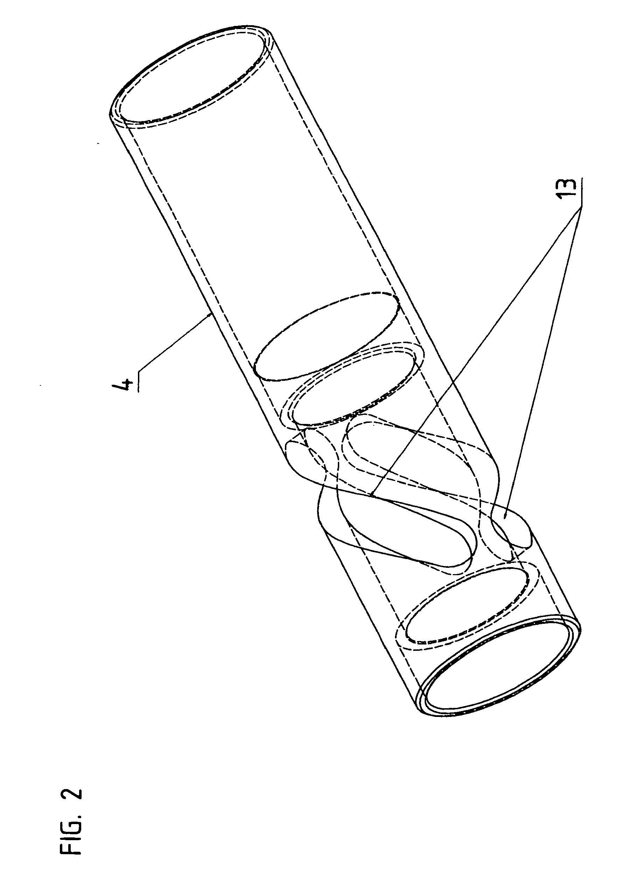

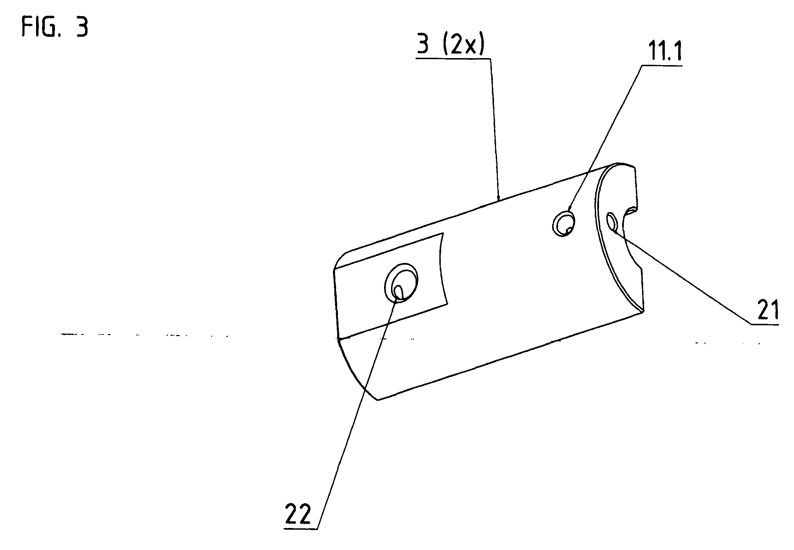

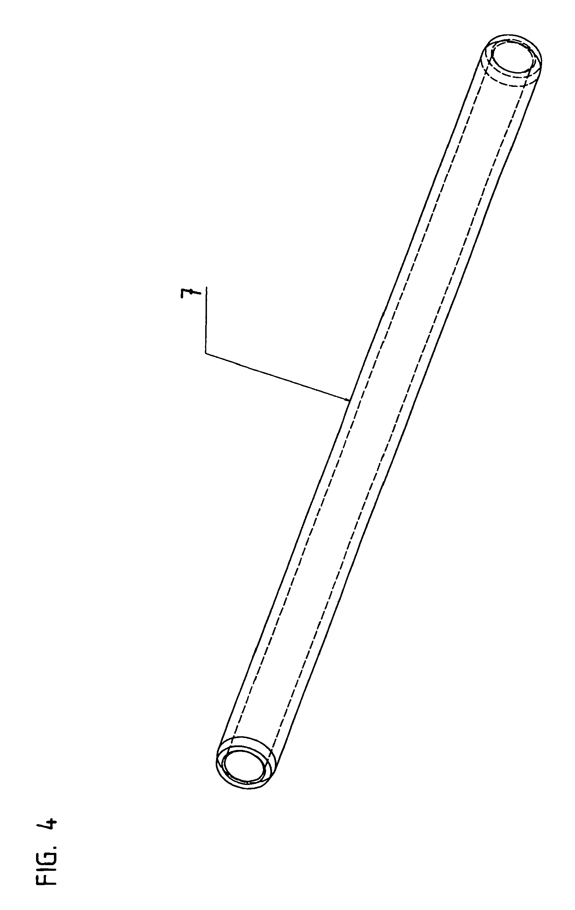

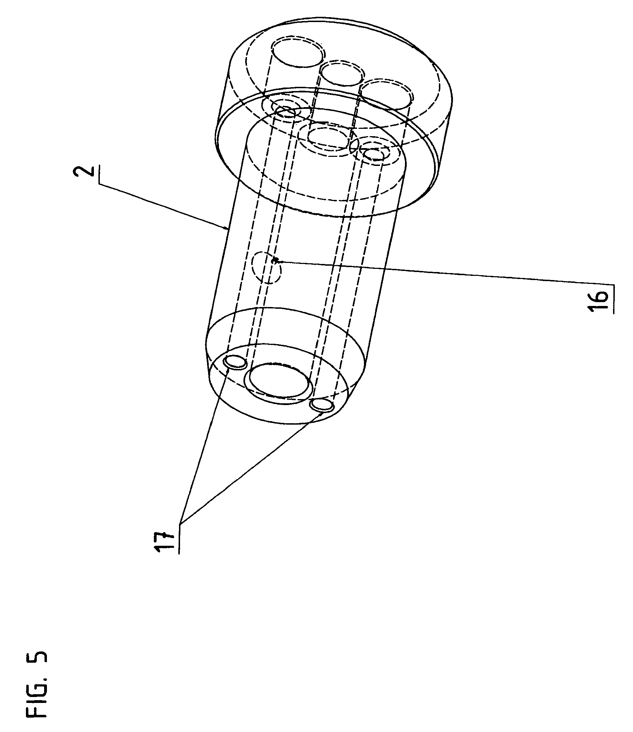

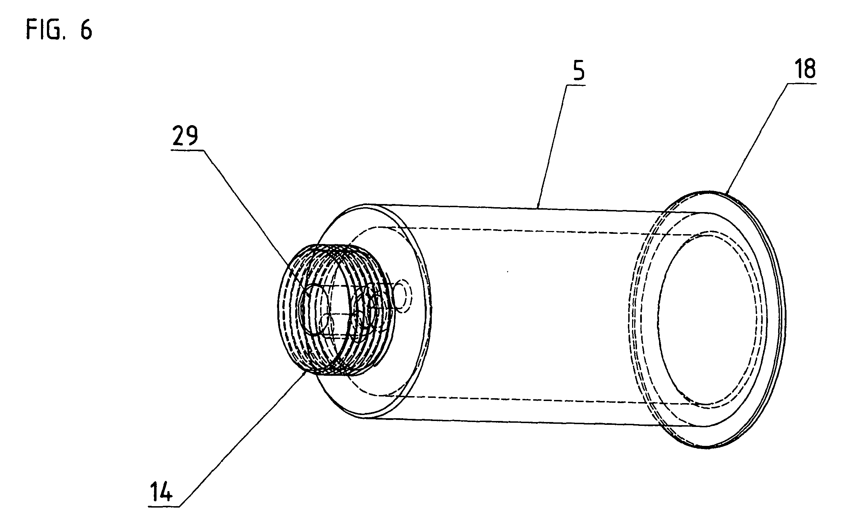

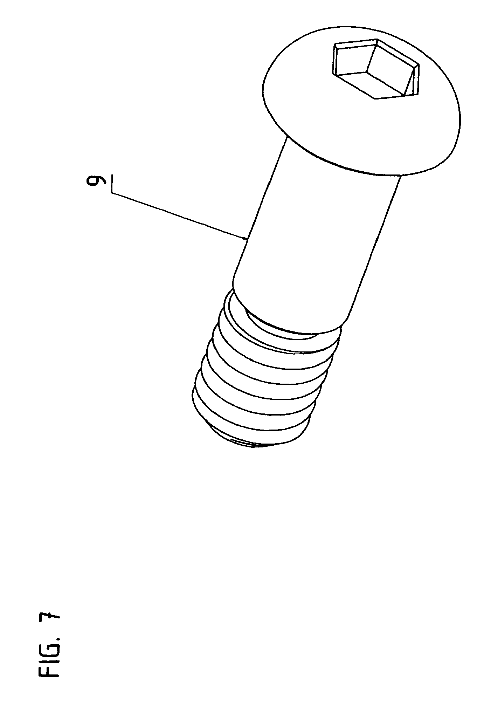

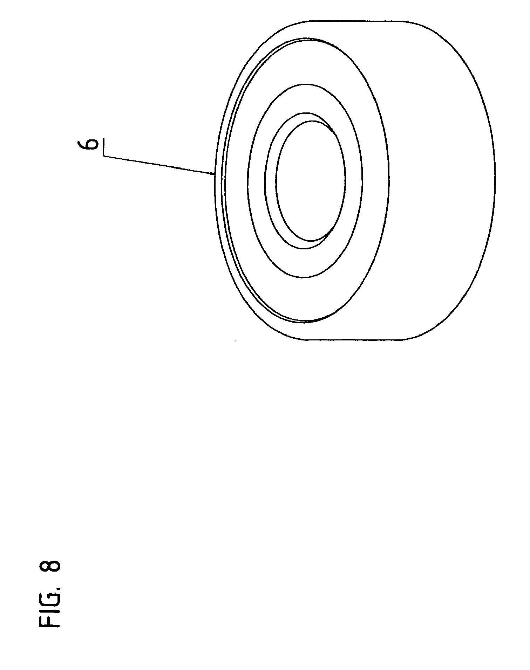

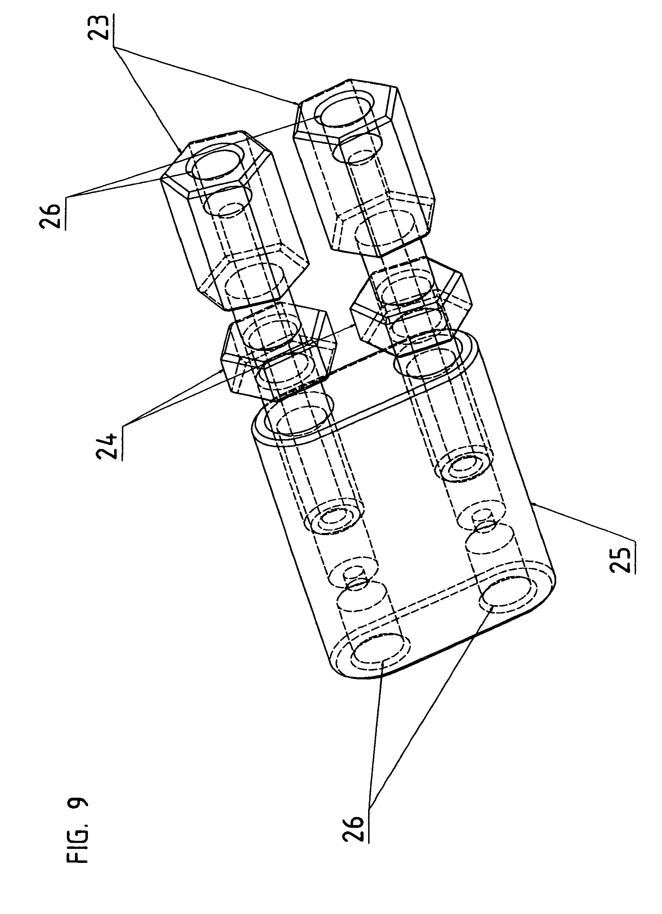

### Beschreibung und Zusammenspiel der Fig. 1 bis 9

**Grundkörper (1)** mit doppelten Führungsnuten (12) zur Führung der Rollen/Kugellager (6), einem Innengewinde (15) zur Verschraubung mit der Aufnahmebuchse (5) mit Bund (18) und Außengewinde (14) welcher für die Aufnahme eines Lenkerenden - Blinkers dient sowie einem Bund (19) zur Begrenzung des vorderen Nadellagers (8).

**Aufnahmebuchse mit Außengewinde (14)** zur Verschraubung mit dem Innengewinde (15) im Grundkörper (1), einem zentralen Kabeldurchführungsloch (29) zur Hindurchführung des Blinkerkabels, welche auch zur Aufnahme des Führungsrohres (7) dient und einem Bund (18) als Abschluss des Gasgriffes.

**Endstück (2)** mit Senkung (16) für die Stiftschraube (10) die im Gewinde (10.1) des Grundkörpers (1) geschraubt, zur Fixierung und Ausrichtung des Endstückes (2) im Grundkörper (1) dient, sowie den Bowdenzug-Durchführungen (17)

**Gleitstück (3)** mit Gewinde (11.1) und Stiftschraube (11) zur Klemmung des Bowdenzuges in der Bohrung (21) und stirnseitiger Gewindebohrung (22) zur Führung und Befestigung der Rollen/Kugellager (6) mittels Spezialschraube mit Schaft (9).

**Doppelschnecke (4)** mit zwei sich gegenüberliegenden und gegenläufigen Spiral-Nuten (13) zur Führung der Rollen/Kugellager (6) und innen mit zwei Passungen zur Aufnahme der beiden Nadellager (8) welche auf den Lagersitzen (20) des Grundkörpers (1) laufen.

**Führungsrohr (7)** zur Führung der beiden Gleitstücke (3) sowie der Hindurchführung des Blinkerkabels.

**Externer Doppelter Bowdenzugspanner (25)** zur exakten Einstellung des Spieles /Lose der Bowdenzüge.

### Funktion:

Bei einer Drehbewegung am Gasgriff wird durch die in den doppelten Führungsnuten (12) und gegenläufigen Spiral-Nuten(13) geführten Rollen/Kugellager (6), diese Drehbewegung in eine Axiale Bewegung der Gleitstücke (3) umgewandelt. Durch die gegenläufigen Spiral-Nuten (13) in der Schnecke (4) bewegen sich die Gleitstücke (3) dadurch jeweils in entgegengesetzte Richtungen, wobei der eine Bowdenzug beim "Gasgeben" eine ziehende Richtung einnimmt und der andere Bowdenzug geschoben wird. Hierdurch wird es möglich bei einem Verklemmen der Drosselklappe oder Bruch der Drosselklappen - Rückholfeder, diese durch eine entgegengesetzte Drehbewegung (Gaswegnahme) des Gasgriffes wieder zwangsweise zu schließen und dadurch den Motor zu drosseln.

### Einzelteilzeichnungen:

- Fig. 1: zeigt den **Grundkörper (1)** mit Gewinde (10.1), Bund (19), Innengewinde (15) und doppelten Führungsnuten (12)
- Fig. 2: zeigt die **Doppelschnecke (4)** mit gegenläufigen Spiral-Nuten (13)
- Fig. 3: zeigt das **Gleitstück (3)** mit Gewinde 11.1, Bohrung 21 und Gewindebohrung (22)
- Fig. 4: zeigt das **Führungsrohr (7)**
- Fig. 5: zeigt das **Endstück (2)** mit Senkung (16) und Bowdenzug-Durchführungen (17)
- Fig. 6: zeigt die **Aufnahmebuchse (5)** mit Bund (18), Außengewinde (14) und Kabeldurchführungsloch (29)
- Fig. 7: zeigt die **Spezialschraube mit Schaft (9)**
- Fig. 8: zeigt das **Rollen**/**Kugellager (6)**
- Fig. 9: zeigt den externen **doppelten Bowdenzugspanner (25)** mit Einstellschrauben (23) und Senkungen (26) sowie Kontermuttern (24)

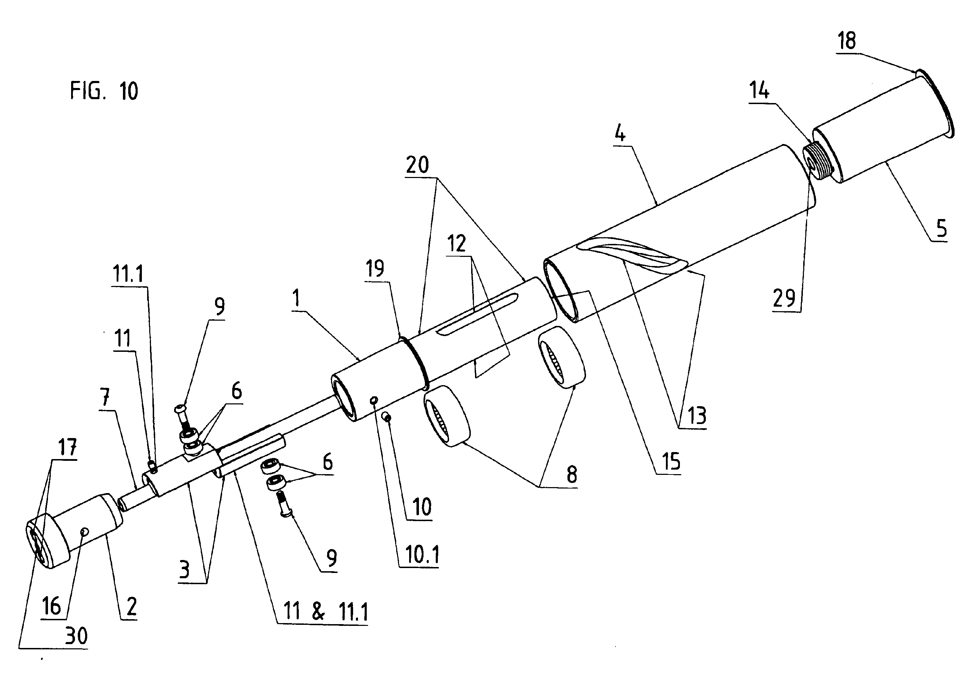

- Fig. 10: zeigt die **Explosionsdarstellung des Doppelzug** - **Gasdrehriffes**

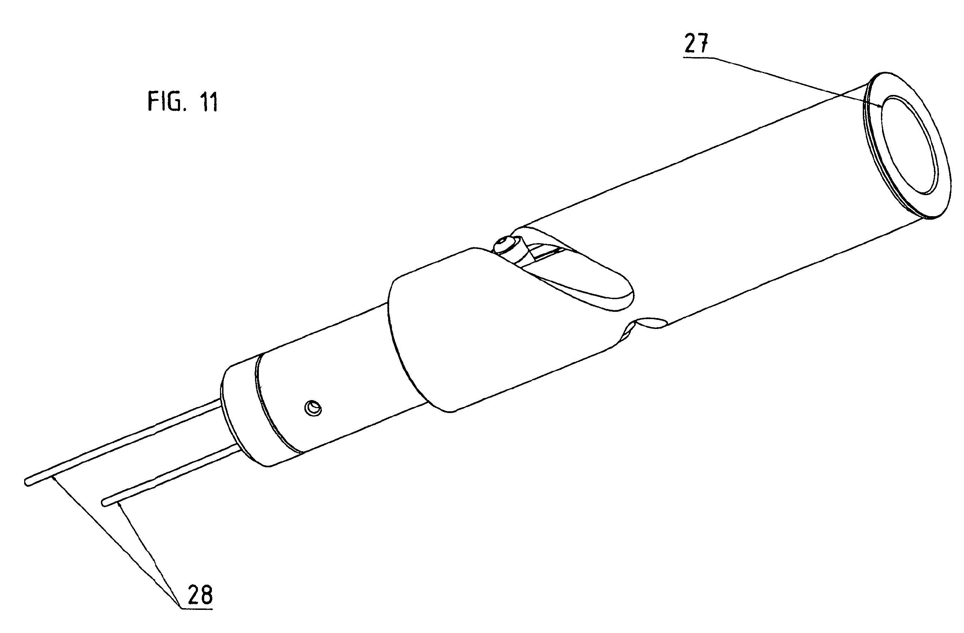

- Fig. 11: zeigt die **Darstellung des zusammengebauten Doppelzug** - **Gasdrehgriffes**

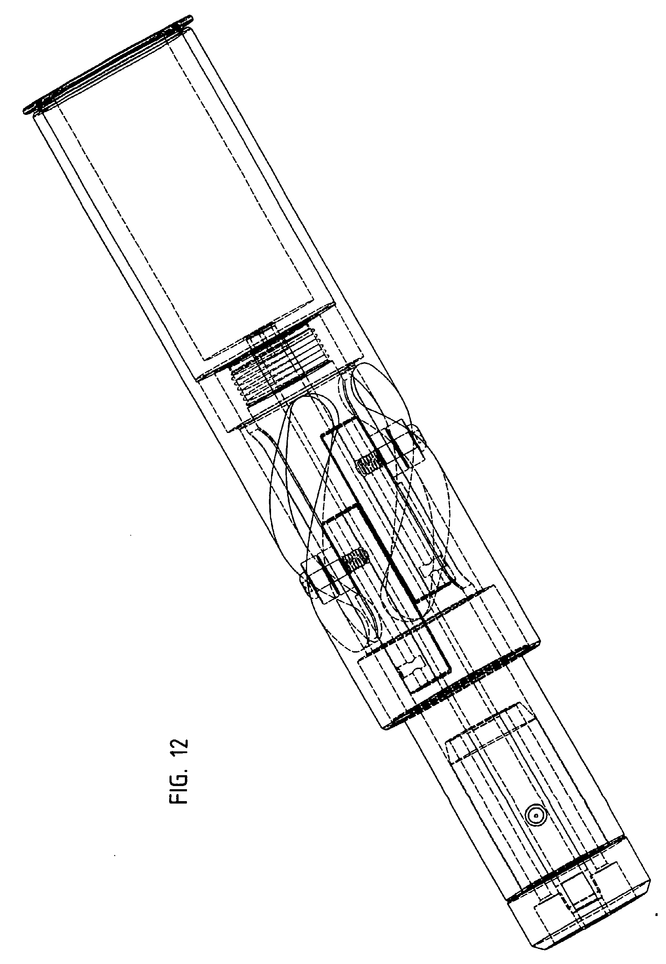

- Fig. 12: zeigt die **Darstellung des Doppelzug** - **Gasdrehgriffes mit Darstellung der verdeckten Kantengeometrien**

## Patentansprüche

1. Innenliegender Doppelzug Gasdrehgriff für kraftstoffbetriebene Fahrzeuge bestehend aus:
einer Doppelschnecke (4), die zwei gegenläufige Spiral-Nuten (13) aufweist,
einem Grundkörper (1) mit doppelten Führungsnuten (12) zur Führung von Rollen/Kugellagern (6),
zwei Gleitstücken (3) in denen sich jeweils ein kopfseitiges Loch (11.1) zur Aufnahme einer Bowdenzugseele (28) befindet, wobei die Gleitstücke (3) mit je einer Stiftschraube (11) ausgestattet sind, mittels der die Bowdenzugseelen festklemmbar sind,
einem Endstück (2),
**gekennzeichnet dadurch**, das
der innenliegende Doppelzug Gasdrehgriff ferner aufweist:
zwei in die Doppelschnecke eingepresste Nadellager (8), durch die die Doppelschnecke (4) auf zwei Lagersitzen (20) des Grundkörpers (1) geführt wird,
ein Führungsrohr (7) zur Hindurchführung von Kabeln für Lenkerenden-Blinker,
eine Aufnahmebuchse (5) mit Bund (18), zur Aufnahme von verschiedenen Lenkerenden - Blinkern, wobei die Aufnahmebuchse mit einem mittigem Kabelführungsloch (29) versehen ist und ein Außengewinde (14) aufweist zur Verschraubung der Aufnahmebuchse mit einem Innengewinde (15) im Grundkörper (1) und
einen externen Bowdenzugspanner (25) zur exakten Einstellung zweier Bowdenzüge (28),
wobei sich das Endstück (2), das zur Fixierung des Führungsrohres (7) dient, am vorderen Teil des Grundkörpers (1) befindet und mit Bowdenzug-Durchführungen (17) sowie einer Senkung (16) zur Ausrichtung und Fixierung des Endstücks (2) im Grundkörper (1) ausgestattet ist.

2. Innenliegender Doppelzug Gasdrehgriff für kraftstoffbetriebene Fahrzeuge nach Anspruch 1 **dadurch gekennzeichnet, dass** die Gleitstücke (3), jeweils zwei mittels einer Spezialschraube mit Schaft (9) verschraubte Rollen/ Kugellager (6) aufweisen, wobei die oberen Rollen/Kugellager jeweils in eine der gegenläufigen Spiral-Nuten (13) der Doppelschnecke (4) eingreifen und die unteren Rollen/Kugellager in den doppelten Führungsnuten (12) des Grundkörpers (1) geführt werden.

3. Innenliegender Doppelzug Gasdrehgriff für kraftstoffbetriebene Fahrzeuge nach Anspruch 1 und 2 **dadurch gekennzeichnet, dass** die Gleitstücke (3) in dem Grundkörper (1) geführt und auf dem Führungsrohr (7) gleitend, mittels Drehbewegung der Doppelschnecke (4) über Rollen/Kugellager (6) eine axiale Bewegung in gegenläufige Richtungen ausüben.

4. Innenliegender Doppelzug Gasdrehgriff für kraftstoffbetriebene Fahrzeuge nach Anspruch 1 bis 3 **dadurch gekennzeichnet, dass** durch die Verschraubung des Außengewindes (14) der Aufnahmebuchse (5) mit einem sich in dem Grundkörper (1) befindlichen Innengewinde (15) die Doppelschnecke (4) mit den beiden eingepressten Nadellagern (8) drehbar fixiert wird.

5. Innenliegender Doppelzug Gasdrehgriff für kraftstoffbetriebene Fahrzeuge nach Anspruch 1 bis 4 **dadurch gekennzeichnet, dass** das Endstück (2) mit einer Senkung (16) ausgestattet ist und mittels einer Stiftschraube (10) in einem Gewinde (10.1) des Grundkörpers (1) geschraubt werden kann um das Endstück (2) im Grundkörper (1) zu fixieren und auszurichten.

6. Innenliegender Doppelzug Gasdrehgriff für kraftstoffbetriebene Fahrzeuge nach Anspruch 1 bis 5 **dadurch gekennzeichnet, dass** sich in den Gleitstücken (3) stirnseitig je eine Gewindebohrung (22) befindet zur Aufnahme einer Spezialschraube mit Schaft (9) als Lagerachse und Befestigung für die je zwei Rollen/Kugellager (6).

## Claims

1. Twistable gas grip for fuel driven vehicles for operating two internal gas cables consisting of:
one twin-screw (4), which having two opposing spiral grooves (13) exhibits,
a base body (1) with double guide grooves (12) for guiding rollers / roller bearings (6),
two sliding pieces (3) in each of which a head-side hole (11.1) to accommodate a Bowden cable (28), whereby the sliding pieces (3) each equipped with a pin screw (11), by means of the Bowden cables can be clamped,
a End piece (2),
marked thereby, that
the Twistable gas grip for operating two internal gas cables further comprising:
Two in the twin screw (4) pressed needle bearings (8), through which the twin-screw (4) on two bearing seats (20) of the base body (1) is guided,
a guide tube (7) for passage of cables for handlebar ends flasher,
a receiving bush (5) with collar (18), to accommodate different handlebar ends flashers, whereby the receiving bush (5) with a Cable Hole (29) in the center is provided and has an external thread (14) for screwing the receiving bush (5) with an internal thread (15) in the Base body (1) and
an external Bowden Cable tensioner (25) for the exact setting of two Bowden cables (28), wherein the end piece (2), the for fixing the guide tube (7) is used, is located at the front part of the base body (1) and with Bowden cable feedthroughs (17) as well as a lowering (16) is provided for the alignment and fixation of the end piece (2) in the base body (1).

2. Twistable gas grip for fuel driven vehicles for operating two internal gas cables according to claim 1 marked thereby, that the sliding pieces (3), two by means of a special screw with shank (9) bolted casters/Bearings (6) exhibit, wherein the upper rollers / ball bearing in each case one of the opposing spiral grooves (13) of the twin-screw (4) intervene and the lower rollers / ball bearings in the double guide grooves (12) of the base body (1) are performed.

3. Twistable gas grip for fuel driven vehicles for operating two internal gas cables according to claim 1 and 2 marked thereby, that the sliding pieces (3) guided in the base body (1) and slided on the guide tube (7), by means of rotational movement of the twin-screw (4) on rollers / ball bearings (6) carry out an axial movement in opposite directions exercised.

4. Twistable gas grip for fuel driven vehicles for operating two internal gas cables according to claim 1 to 3 marked thereby, that by the screwing of the external thread (14) of the receiving socket (5)
with one situated in the base body (1) located inside thread (15), the twin-screw (4) with the two pressed-in needle bearings (8) is fixed rotatably.

5. Twistable gas grip for fuel driven vehicles for operating two internal gas cables according to claim 1 to 4 marked thereby, that the end piece (2) is provided with a countersink (16), and by means of a pin screw (10) in a thread (10.1) of the base body (1) can be screwed, in order the end piece (2) in the base body (1) to fix and to align.

6. Twistable gas grip for fuel driven vehicles for operating two internal gas cables according to claim 1 to 5 marked thereby, that in the sliding pieces (3) face side each is located a threaded bore (22), to receive a special screw with shank (9) as bearing axle and mounting for the two rollers / ball bearings (6).

## Revendications

1. Poignée tournante de gaz à deux câbles pour véhicules fonctionnant au carburant composée de :
Une double-vis (4), qui possède deux rainures en spirale en sens contraire (13),
Un corps de base (1) avec doubles rainures principales (12) pour entraîner des roulettes/roulements à billes (6),
Deux rails (3), dans lesquels se trouve chaque fois un trou du côté de la tête (11.1) pour la direction des corps de câble sous gaine (28), où chaque rail (3) est équipé d'un goujon, au moyen duquel les corps de câble sous gaine peuvent être ajustés,
Un élément de bout (2),
**Caractérisé par le fait que** la double commande de la poignée tournante de gaz est équipée en outre de :
Deux roulements à aiguilles pressés dans l'élément à double-vis (8), par lesquels l'élément à double-vis est dirigé sur deux assises de support (20) du corps de base (1),
Un tube de direction (7) pour faire passer des câbles de clignotants de bout du guidon,
Une douille de maintien (5) avec assise de maintien (18), pour l'insertion de différents clignotants de bout du guidon, où la prise est munie d'un trou de conduite centré pour câbles et est équipée d'un pas de vis extérieur pour le vissage de la prise avec un pas de vis intérieur (15) dans le corps de base (1) et
Un tendeur de corps de câbles sous gaine (25) extérieur pour le réglage fin de deux tendeur de câbles (28), sur lequel la pièce de bout (2), qui sert de fixation aux gaines de câbles (7) et se trouve sur la partie avant du corps de base (1), est équipée de perçages pour l'installation des tendeurs de câbles, comme d'une réduction (16) pour l'alignement et la fixation de la pièce de bout (2) dans le corps de base (1)

2. Poignée tournante de gaz à deux câbles pour véhicules fonctionnant au carburant selon revendication 1 et selon la description suivante:
poignée des gaz intégrée à double action composée d'éléments de guidage (3), c'est-à-dire deux éléments centraux glissant au centre d'une vis spéciale avec manche (9) et de roulettes/roulements (6) à billes vissés, sur lesquels les roulettes/roulements à billes supérieurs se déplacent dans une double extrusion en spirale inversée (13) dans la pièce à double-vis (4) et les roulettes/roulements à billes inférieurs se déplacent et sont guidées dans une double extrusion (12) dans le corps de base (1).

3. Poignée tournante de gaz à deux câbles pour véhicules fonctionnant au carburant selon revendications 1, 2 et selon la description suivante:
poignée des gaz intégrée à double action dans laquelle les deux éléments centraux glissants (3) se meuvent dans le corps de base (1) et sont guidés par le tube de guidage (7), par l'action du mouvement de rotation de la double-vis (4) par le moyen des roulettes/roulements à billes (6), et exercent un mouvement axial et inversé.

4. Poignée tournante de gaz à deux câbles pour véhicules fonctionnant au carburant selon revendications 1, 2, 3 et selon la description suivante:
que l'action de vissage de la douille de maintien (5) au moyen du pas de vis extérieur (14) dans le pas de vis intérieur (15) du corps de base (1), maintien et fixe avec rotation axiale la double-vis (4) avec les deux roulements à aiguilles (8) insérés par pression.

5. Poignée tournante de gaz à deux câbles pour véhicules fonctionnant au carburant selon revendications 1, 2, 3, 4 et selon la description suivante:
que la pièce de bout (2) comporte une réduction (16) et peut être fixée et orientée dans le corps de base (1) au moyen d'un goujon (10) vissé dans un pas de vis (10.1) dans le corps de base (1)

6. Poignée tournante de gaz à deux câbles pour véhicules fonctionnant au carburant selon revendications 1, 2, 3, 4,5 et selon la description suivante:
que les éléments de glissement (3) comportent sur leur face un pas de vis (22) servant à la fixation d'un goujon spécial à vis (9) faisant usage d'axe et de fixation des deux roulettes/roulements à billes.
